(19) **Europäisches Patentamt**
**European Patent Office**
**Office européen des brevets**

(11) **EP 2 824 586 A1**

(12) **EUROPEAN PATENT APPLICATION**

(43) Date of publication:
**14.01.2015 Bulletin 2015/03**

(51) Int Cl.:
***G06F 17/27*** *(2006.01)* ***G06F 17/30*** *(2006.01)*

(21) Application number: **13175793.2**

(22) Date of filing: **09.07.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Universiteit Twente**
**7522 NB Enschede (NL)**

(72) Inventors:
• **Van den Broek, Egidius Leon**
**7522 NB Enschede (NL)**
• **Van der Sluis, Frans**
**7522 NB Enschede (NL)**

(74) Representative: **Vernout, Robert**
**Arnold & Siedsma**
**Bezuidenhoutseweg 57**
**2594 AC The Hague (NL)**

(54) **Method and computer server system for receiving and presenting information to a user in a computer network**

(57) A method for receiving and presenting information to a user in a computer network or a computer device, comprising: the step of receiving at least one text from the computer network or the computer device, said text being tagged with a text information intensity indicator; the step of determining a user channel capacity indicator; the step of comparing said channel capacity indicator with said text information intensity indicator; and the step of presenting said text or a representation of said text to said user on said device or an a device in said computer network, wherein said presentation of said text or said representation of said text is modified by using the result of said comparison.

**EP 2 824 586 A1**

**Description**

The invention relates to a method for receiving and presenting information to a user in a computer network. Such a method is known, and is for instance used by the well known search engines Google Search™, Bing™, Yahoo! Search™ and Baidu™. With these search engines the information is retrieved and presented to the user in the form an sorted list of links to documents on the internet, wherein said documents can for instance be HTML web pages or PDF documents.

The invention aims at a method which provides an improved communication efficiency of the received and presented information.

In order to achieve that goal, according to the invention the method comprises:

the step of receiving at least one text from the computer network or the computer device, said text being tagged with a text information intensity indicator;
the step of determining a user channel capacity indicator;
the step of comparing said channel capacity indicator with said text information intensity indicator; and the step of presenting said text or a representation of said text to said user on said device or an a device in said computer network, wherein said presentation of said text or said representation of said text is modified by using the result of said comparison.

Preferably said text information intensity and user channel capacity indicator each comprise a multitude of numerical values, each value representing a different text complexity feature.

Preferably the step of comparing said indicators comprises the step of establishing the difference, for instance in the form of a positive or negative distance between each text information intensity vector representation of said numerical values with said user channel capacity vector representation of said numerical values, and comparing said differences.

Preferably the step of modifying said presentation comprises the step of giving preference to texts having smaller differences between their text information intensity indicator and the user channel capacity indicator over texts having larger difference between their text information intensity indicator and the user channel capacity indicator.

Preferably the method further comprises the step of determining whether the difference is positive or negative, and using this determination for modifying said presentation.

Preferably said user channel capacity indicator is linked to said user.

Preferably said user channel capacity indicator is established by analyzing texts which said user interacts with, generates and/or opens in said computer network or on said computer device, and storing said user channel capacity indicator in said computer network or on said computer device.

Preferably said user channel capacity indicator is established by analyzing said texts in the same manner as the received texts are analyzed to establish said text information intensity indicator.

Preferably said user channel capacity indicators are stored locally on a device of said user, for instance as web cookies.

Preferably said method further comprises the step of receiving a request for information which a user inputs on a device in said computer network or on said computer device; wherein said received text or texts are retrieved in such a manner that they relate to the requested information.

Preferably said method comprises providing a set of different user channel capacity indicators linked to said user and determining an appropriate user channel capacity indicator depending on an analysis of the request for information or the received information. It is also possible to determine (which includes adjusting) an appropriate user channel capacity indicator depending on other circumstances, such as the time of day, current location or the kind of activity the user is currently undertaking.

Preferably said method further comprises the step of filtering and/or ranking said selected texts by using the result of said comparison, and the step of presenting representations of said filtered and/or ranked texts to said user on said device or on said device in said computer network, such that said user can choose to open and/or read said texts.

Preferably the step of retrieving said text or texts relating to the requested information from the computer network or the computer device is performed by a web search engine such as the web search engines used by Google Search™, Bing™, Yahoo! Search™ and Baidu™.

Said devices can be for instance personal computers, laptops, smart phones or tablets. Said computer network can for instance be the internet.

According to the invention, preferably said text complexity features comprise at least one, preferably more than one, of the following features:

- lexical familiarity of words, for instance as defined by:

fam = $\log_{10}$cnt(w),
wherein cnt(w) is the term count per word w;

- connectedness of words, for instance as defined by:

$$con1 = |A_n(w)| = |A_{n-1}(w) \cup \{\varphi \in W | r(\varphi, \varphi') \wedge \varphi \in A_{n-1}(w)\}| \quad \text{(Equation 2.10)}$$

wherein $|A_n(w)|$ is the node degree in n steps to a word w, where $r(\varphi, \varphi')$ is a Boolean function indicating if there is any relationship between synonym set $\varphi$ and synonym set $\varphi'$; or
as defined by:

$$con2 = C(T(w)) = C \circ T(w) = C \circ [t_1, \ldots, t_n], \quad \text{(Equation 2.15)}$$

wherein n is the number of topics t , which indicates the extent to which a word w is associated with a topic t
where $c(w, d_j)$ gives the number of occurrences of word w in text $d_j$ and $|d_j|$ gives the number of words in text $d_j$, and

$$C(T) = \log_{10}(T \cdot I), \qquad \text{(Equation 2.19)}$$

wherein I is a vector in topic space containing for each topic t the number of links $i_t$ pointing to that topic, and T is a topic vector;
- character density in texts, for instance as defined by:

$$cha_n = f_w(X) \text{ with } f(X) = H_n(X).$$

$$\text{with } f_w(X) = \sum_{i=w}^{n} (n-w)^{-1} f \circ \{x_j : j = i-w+1, \ldots, i\}$$

$$\text{with } H_n(X) = - \sum_{x_1 \in X} \ldots \sum_{x_n \in X} p(x_1, \ldots, x_n) \log_2 p(x_1, \ldots, x_n),$$

where X is an ordered collection of characters x, and $p(x_1, \ldots, x_n)$ indicates the probability of the sequence $x_1, \ldots, x_n$ in X;
- word density in texts, for instance as defined by:

$$wor_n = f_w(X) \text{ with } f(X) = H_n(X)$$

$$H_n(X) = - \sum_{x_1 \in X} \ldots \sum_{x_n \in X} p(x_1, \ldots, x_n) \log_2 p(x_1, \ldots, x_n) \qquad \text{(Equation 2.2)}$$

where X is an ordered collection of words x, and $p(x_1, \ldots, x_n)$ indicates the probability of the sequence $x_1, \ldots, x_n$ in X;
- semantic density in texts, for instance as defined by:

$$sem = f_w(X) \text{ with } f(X) = H(T(X)) = H \circ T(X)$$

$$\text{with } f_w(X) = \sum_{i=w}^{n} (n-w)^{-1} f \circ \{x_j : j = i-w+1, \ldots, i\} \qquad \text{(Equation 2.4)}$$

$$\text{with } H(T) = - \sum_{t \in T} p(t) \log_2 p(t) \qquad \text{(Equation 2.1)}$$

$$\text{with } T \circ X = \sum_{i=1}^{n} T(x_i)/n \qquad \text{(Equation 2.17)}$$

where $X = \{x_i : i = 1, \dots, n\}$ is an ordered collection of n words x;
where $T \circ x = [t_1, \dots, t_m]$ is a topic vector for a word x defined as its relative weight for m topics t,

$$\text{wherein } p(t) = t/(\sum_{i=1}^{n} t_i) \text{ if } t \in T ; p(t) = 0 \text{ else} \qquad \text{(Equation 2.20)};$$

- dependency-locality in sentences, for instance as defined by:

$$\text{loc} = I(D) = \sum_{d \in D} L_{DLT}(d) \qquad \text{(Equation 2.13)}$$

where D is a collection of dependencies d within a sentence,
wherein d contains at least two linguistic units,
wherein $L_{DLT}(d) = \text{cnt}(d, Y) = \Sigma_{y \in Y} \text{cnt}(d,y)$
where $\text{cnt}(d, y)$ is the number of occurrences of a new discourse referent, such as suggested by a noun, proper noun, or verb, in d;
- surprisal of sentences, for instance as defined by:

$$\text{sur}_n = PP_n(X) = 2^{Hn(X)} \qquad \text{(Equation 2.3)}$$

with $H_n(X) = - \Sigma_{x1 \in X} \dots \Sigma_{xn \in X} p(x_1, \dots, x_n) \log_2 p(x_1, \dots, x_n)$
where X is a sentence consisting of N words x, $X = \{x_i : i = 1, \dots, N\}$;
- ratio of connectives in texts, for instance as defined by:

$$P(Y, u) = \sum_{y \in Y} \text{cnt}(u, y)/\text{cnt}(u) \qquad \text{(Equation 2.11)}$$

where $P(Y, u)$ is the ratio of words with a connective function, such as subordinate conjunctions, compared to all words in u,
where u is the unit of linguistic data under analysis, $\text{cnt}(u, y)$ is the number of occurrences of connectives in u, and $\text{cnt}(u)$ is the total number of words in u;
- cohesion of texts, for instance as defined by:

$$\text{coh}_n = C_n(X) = \sum_{i=1}^{N} \sum_{j=\max(1,i-n)}^{i-1} (i-j)^{-1} \text{sim}(x_i, x_j) \qquad \text{(Equation 2.5)}$$

wherein $C_n(X)$ is the local coherence over n nearby units,
wherein $\text{sim}(x_i, x_j)$ is a similarity function between two textual units $x_i$ and $x_j$,
where X is an ordered collection of N units; and

$$\text{wherein } \text{sim}(x_i, x_j) = |\{r \in R | m(r, x_i) \wedge m(r, x_j)\}| \qquad \text{(Equation 2.14)}$$

where R is the set of referents and where $m(r, x)$ is a Boolean function denoting true if a referent r is mentioned in a textual unit x,
or:

$$\text{wherein } \text{sim}(x_i, x_j) = \{T(x_i) \cdot T(x_j)\}/\{\|T(x_i)\| \|T(x_j)\|\} \qquad \text{(Equation 2.18)}$$

where $\|T(x)\|$ is the norm of topic vector $T(x)$ for a textual unit $x$.

Furthermore said text complexity features may comprise word length, for instance as defined by: $len1 = |c \in w|$, word length in characters per word, or $len2 = |s \in w|$, word length in syllables per word.

The invention furthermore relates to a computer server system in a computer network or a computer device provided with a computer programme arranged to perform a method for receiving and presenting information to a user in said computer network, said method comprising:

the step of receiving a at least one text from the computer network or the computer device, said text being tagged with a text information intensity indicator;
the step of determining a user channel capacity indicator;
the step of comparing said channel capacity indicator with said text information intensity indicator;
the step of presenting said text or a representation of said text to said user on said device or an a device in said computer network, wherein said presentation of said text or said representation of said text is modified by using the result of said comparison.

The proposed system determines (a) the information intensity of and (b) the channel capacity for natural language based on the analysis of the information complexity. With the information intensity and channel capacity, the system can determine the communication efficiency of natural language. This communication efficiency gives an indication of the optimality of information. It can inform information systems that handle a request to achieve an optimal selection, retrieval, and presentation of information. The proposed system allows to select information based on how it is written, contrary to what is written or to how much data is required to store it.

The invention will now be described in more detail by means of a preferred embodiment.

1.1 Complexity

As input the system takes a text, which either is or should be divided into different level of granularity (i.e., down to paragraphs, sentences, words, and characters); see Section 2.3. Each (part of) text is converted into different representations; for example, language model, topic model, Probablistic Context-Free Grammar (PCFG), and semantic network; see Section 2.2. A novel set of (cognitively inspired) features are derived from these representations, each reflecting unique aspects of the information complexity of natural language. By way of example, in total 33 features (F) have been developed based on 13 core features (see Section 2.1). Applying such a set of features (F) results in a vector representation of the complexity com(t) of a text t, containing the analyses by n features $f \in F$:

$$\text{com}(t) = [f_1(t)\ f_2(t)\ ...\ f_{n-1}(t)\ f_n(t)] \qquad (1.1)$$

Given a searchable or selectable corpus of texts Ti, the information intensity is determined by analyzing the complexity of these texts (at different levels; e.g., paragraphs). The resulting vectors of these analyses are stored as metadata about the corpus in a matrix I, where each column presents a feature and each row presents a text t:

$$I = [i_{t,f}]_{t \in Ti, f \in F}\ ;\ i_t = \text{com}(t) \qquad (1.2)$$

The channel capacity is determined by the same analysis of complexity. For this, either a corpus $T_c$ that represents contemporary (standard) writing or a collection of reading and writing that relate to a user is used. The latter is a personalized channel capacity and can be derived from the analysis of a user's history of information use. The vectors resulting from this analysis are stored in a matrix C, where each column presents a feature and each row presents a text $t \in T_c$:

$$C = [c_{t,f}]_{t \in Tc, f \in F} \; ; \; c_t = com(t) \qquad (1.3)$$

To be able to use either matrices, the values are reduced to a single number by summarizing the different features F and texts T, as described next.

1.2 Feature weights

To summarize the set of features into a single representation of textual complexity, a classifier is used, such as a Logisitic Regression Model (LRM), a Support Vector machine (SVM), or a Random Forest (RF). As example, we will use a simple linear predictor function. Given a vector of weights $\beta_F$ denoting the importance $\beta_F$ for n features $f \in F$:

$$\beta_F = [\beta_1 \; \beta_2 \ldots \beta_{n-1} \; \beta_n] \qquad (1.4)$$

Here, the sum of the weights $\beta_f$ adheres to $\Sigma_{f \in F} \; \beta_f = 1$. The vector of weights $\beta_F$ is based upon:

- as default, public training data rated on complexity (ratings $R_T$) (see Section 2.4); or,
- based on private training data ($T_c$) rated on complexity (ratings $R_T$).

Any ratings (private and public) are stored as a sparse vector R that contains the ratings of complexity r for n (rated) texts $t \in T_c$:

$$R_t = [r_1 \; r_2 \ldots r_{n-1} \; r_n] \qquad (1.5)$$

In the case of private training data, this data consists of the same texts as used for $T_c$, since both refer to texts written or read by a user. To be used for training, ratings of complexity about these texts are gathered through explicit or implicit feedback. The former queries the user to rate the complexity of a text presented to the user; either in a setup phase or during information interaction. The latter uses implicit measures, such as pupil size detected using eye-tracking (Duchowski, 2007), to gather a rating of the complexity of a text.

Optionally, if enough data points and computational capacity are available, a classifier can be trained with weighted training data using $\beta_T$ (explained further on). This $\beta_T$ assigns a weight to each text $t \in T_c$ based on the relevance of a text to a request. Hence, $\beta_T$ is only available during a specific request, which causes this weighted classification to only be possible during a request. The optional weighting of the training data allows the system to incorporate an interaction between relevance (or topicality) and complexity; namely, by letting $\beta_F$ depend on $\beta_T$.

Given the weights $\beta_F$ and a vector of equal length resulting from the analysis of complexity com(t), the complexity of a text t can be summarized via com'(t) = $\beta_F \cdot$ com(t). Using $\beta_F$ the matrices I and C are weighted and summarized:

$$I' = \beta_F I = [i_1 \; i_2 \ldots i_{m-1} \; i_m]^T \; ;$$
$$C' = \beta_F C = [c_1 \; c_2 \ldots c_{n-1} \; c_n]^T \qquad (1.6)$$

Here, m and n refer to the total number of texts t either in $T_i$ or $T_c$, respectively.

1.3 Text Weights

To indicate the channel capacity, not only the columns (features) but also the rows (texts) are summarized.

For this summary, not all texts are of equal importance given a request. Hence, weights $\beta_t$ are assigned to each text t based on the relevance of a text to a request. The vector of weights $\beta_T$ contains the weights $\beta$ for n texts $t \in T_c$:

$$\beta_T = [\beta_1\ \beta_2 \ldots \ \beta_{n-1}\ \beta_n] \qquad (1.7)$$

The channel capacity can be customized by weighting (weights $\beta_t$) the vectors com(t) according to their relevance to a request. Any method can be used to define the relevance of a text given a request. For example, given a query q that belongs to a request, the relevance can be defined by a query likelihood model (cf. Manning et al., 2008), which gives the probability of a query to be generated by the language (model) of a text ($M_t$) (see Section 2.2.2):

$$\beta_t = P(q|t) = P(q|M_t) \qquad (1.8)$$

Similarly, given a text t that belongs to a request, the weights $\beta_t$ for each text $t \in T_c$ can be calculated by the probability of the text $t_r$ to be generated by a text $t \in T_c$. Although this probability is difficult to assess directly, an inverse probability or risk R can be approximated using a distance measure. For example, the Kullback-Leibner distance between two language models can be determined (cf. Manning et al., 2008, p. 251):

$$R(t;t_r) = KL(M_t||M_r) = \sum_{x \in t} P(t|M_r)\log(P(x|M_r)/P(x|M_t)); \quad \beta_t = -R(t;t_r) \qquad (1.9)$$

Here, $M_r$ is the language model that represents the text of the request $t_r$ and $M_t$ the language model of a text $t \in T_c$.
Measures of relevance, either with respect to a query or a document, often represent a power law distribution. For computational efficiency, a threshold $\theta$ can optionally be defined below which $c_t$ does not contribute to the channel capacity ˉcˉ: $\beta_t \geq \theta$. Such a threshold ignores the long tail of the power distribution. For further reference, all $\beta_t < \theta$ are set to zero.
Both I or C can be stored "in the cloud"; that is, by a separate service which analyzes texts (com(t)) and stores and serves the results of these analyses. This service takes metadata about a (subset) of T and (possibly) $\beta_F$ as input and returns I' or C'. Similarly, in the case of local/personal data it is possible to store (and analyze) locally; that is, near the data.

1.4 Effiency

Now the vectors with weights and the matrix I have been defined deriving the information intensity is possible. Given a text t that belongs to a request, the row in matrix I corresponding to this text can be retrieved. In the case that t is not in I, I has to be updated to include $i_t$. The row $i_t$ is a vector containing the analyses by n features $f \in F$ for a text t:

$$i_t = [i_{t,1}\ i_{t,2} \ldots i_{t,n-1}, i_{t,n}] \qquad (1.10)$$

Then, the dot product of $i_t$ with $\beta_F$ gives the information intensity $i_t'$ of the text t:

$$i_t' = \beta_F \cdot i_t \qquad (1.11)$$

The channel capacity is computed using the matrix C. Namely, by taking a weighted average of the complexity of the texts $T_c$:

$$\bar{c} = \beta_T \cdot (\beta_F C) \qquad (1.12)$$

Here, the weights $\beta_t$ first need to be normalized in order to adhere to $\Sigma_{t \in Tc} \beta_t = 1$.

To be able to see where the information intensity $i_t'$ of a text t lies in relation to $\bar{c}$, an indication of the distribution of the channel capacity is needed. For example, as indicated by the weighted variance in channel capacity. The row $c_t$ is a vector containing the analyzes by n features $f \in F$ for a text $t \in T_c$:

$$c_t = [c_{t,1} \ c_{t,2} \ \ldots \ c_{t,n-1} \ c_{t,n}] \qquad (1.13)$$

Then, the dot product of with $\beta_F$ gives a summary of the complexity of $c_t'$ of the text $t \in T_c$:

$$c_t' = \beta_F \cdot c_t \qquad (1.14)$$

In accordance with the weighted situation of C, a weighted variance can be calculated. Again, the weights $\beta_t$ first need to be normalized in order to adhere to $\Sigma_{t \in Tc} \beta_T = 1$. Then, the weighted variance can be calculated as following:

$$s^2 = V_1/(V_1^2 - V_2) \sum_{t \in Tc} \beta_t (c_t' - \bar{c})^2 \qquad (1.15)$$

with $V_1 = \Sigma_{t \in Tc} \beta_t = 1$ (as normalized) and $V_2 = \Sigma_{t \in Tc} \beta_t^2$ for all $\beta_t \in \beta_T$.

Given a text t that belongs to a request, the distance between the information intensity $i_t'$ and channel capacity $\bar{c}$ indicates the inverse communication efficiency. This efficiency is an inverted-U relation between information intensity and channel capacity, which increases with information intensity until a peak is reached when the information intensity equals the channel capacity, and decreases further-on with the inverse slope of the information intensity. The difference between the two values indicates whether the information intensity is above (i.e., a positive distance) or below (i.e., a negative distance) the channel capacity. One possible method to indicate the distance of $i_t'$ from $\bar{c}$ given a standard deviation s is via a student-t-score:

$$eff = (\bar{c} - i_t')/(s/\sqrt{n}) \qquad (1.16)$$

Here, n is the number of texts $\{t \in Tc | \beta_t > \theta\}$. The degrees of freedom (df) of this score is n-1. The student-t-score has the useful property of being convertible to a probability. Moreover, using the distribution of student-t it is possible to over- or under-estimate the communication efficiency as well, which gives an important tuning parameter.

1.5 Reranking

The resulting indication of communication efficiency can serve as input for information systems. A possible situation is that an information system asks for feedback on whether a user will find a document relevant for a request, to which the communication efficiency gives an indication. A negative distance indicates a shortage of information intensity in comparison to the channel capacity (i.e., the first half of the inverted-U), which suggests a lack of novelty-complexity (interest-appraisal theory; Silvia, 2006) and effect (relevance theory; Sperber, 1996). A positive distance indicates an excess of information intensity in comparison to the channel capacity (i.e., the second half of the inverted-U), which suggests the incomprehensibility of the information (interest-appraisal theory) and a rapid increase in effort (relevance theory). Finally, high efficiency (i.e., a distance of close to zero) is optimal.

The information intensity, channel capacity, and communication efficiency of natural language can be used to indicate relevance and, accordingly, to perform (re)ranking. With reranking, or ranking, an information system compares numerous documents against each other given a request for information (an information-pull scenario) or given a user model (an information-push scenario).

With ranking, an efficient algorithm is used to rank the documents in a searchable corpus. Hypothetically, these algorithms can be extended and include the communication efficiency in determining the ranking. For example, the tf-idf (term frequency, inverse document frequency) can easily be extended to become a tf-idf-eff (term frequency, inverse document frequency, communication efficiency). Since these algorithms are highly optimized to reduce computational load, the calculation of communication efficiency also needs to be optimized. This is possible by, for example, storing I' in the document index.

With reranking, usually the top-k-documents are re-ranked according to more elaborate descriptors of either the query, the document, or the relation between the two, such as the communication efficiency. This reranking is based on a model (e.g., a classifier) of how all the elements combine to optimally predict relevance; for example, by applying learning-to-rank (Liu, 2009). Given that reranking only occurs for the top-k-documents, the computational load is much less of an issue and allows a more elaborate implementation of the communication efficiency.

Complexity Analyses

A set of 33 features will be derived from a text. This set of features forms a vector that represents the complexity of a text. The features are defined in Section 2.1, the Models in Section 2.2, and the implementation details in Section 2.3.

2.1 Features

2.1.1 Word Features

Word Length

Word length is generally defined as the number of characters per word. For completeness with the traditional readability formulae the number of syllables per word will be defined as well:

$len1 = |c \in w|$, word length in characters c per word w;
$len2 = |s \in w|$, word length in syllabels s per word w.

Lexical Familiarity

Printed word frequency will be defined as measure of lexical familiarity:

$fam = \log_{10} c(w)$, the logarithm of the term count c per word w.

For the term count function c, a representative collection of writing is needed. In this study the Google Books N-Gram corpus will be used. The use of a logarithm is congruent with Zipf's law of natural language, stating that the frequency of any word is inversely proportional to its rank in a frequency table (Zipf, 1935).

Connectedness

The semantic interpretation of a word has been shown to influence word identification. The degree of a node is indicative of its connectedness. It represents the number of connections a node has to other nodes in the network. Based on two different semantic models (WordNet as semantic lexicon and as topic space) two different features of connectivity will be defined:

$Con1 = |A_n(w)|$, the node degree within n steps of a word w in a semantic lexicon (Equation 2.10).
$Con2 = C \circlearrowleft T(w)$, the in-degree of the concept vector T(w) of a word w in topic space (Equation 2.15 and Equation 2.19).

2.1.2 Inter-word Effects

Besides characteristics of the words themselves influencing their processing difficulty, relations between nearby words and the target word influence its processing difficulty as well. The connections between words have been found on multiple representational levels. Here, two representational levels will be described: orthographic and semantical.

Character and Word Density

Numerous studies of priming have shown that a target string is better identified when it shares letters with the prime. From an information theoretic point of view, repetition creates a form of redundancy which can be measured in terms of entropy. Entropy is a measure of the uncertainty within a random variable. It defines the amount of bits needed to encode a message, where a higher uncertainty requires more bits (Shannon, 1948). Since the aim is not to measure text size but instead, to measure uncertainty, a sliding window will be applied within which the local uncertainty will be calculated. This Sliding Window Entropy (SWE) gives a size invariant information rate measure, or in other words, an information density measure. Text with a higher repetition of symbols will have a lower entropy rate. Using a sliding window $f_w$ (Equation 2.4) of entropy $H_n$ (Equation 2.2) and probability mass function (pmf) $p(x)$ (Equation 2.6) two features are defined using either characters or words as symbols:

$cha_n = f_w(X)$ with $f(X) = H_n(X)$, a sliding window of n-gram entropy using pmf $p(x)$ where X is an ordered collection of characters x.

$wor_n = f_w(X)$ with $f(X) = H_n(X)$, a sliding window of n-gram entropy using pmf $p(x)$ where X is an ordered collection of words x.

Semantic Density

In a seminal study, Meyer and Schvaneveldt (1971) showed that subjects were faster in making lexical decisions when word pairs were related (e.g., cat-dog) than when they were unrelated (e.g., cat-pen). For indicating the congruence of words with the discourse, a measure of entropy is proposed within the ESA topic space. In a topic space each dimension represents a topic. Within this topic space, the discourse is described as the centroid of the concept vectors of each of the individual words. Based on the resulting concept vector, the entropy can be calculated using the topics (i.e., dimensions) as symbols. The entropy of the centroid concept vector indicates the semantic information size of the discourse; that is, the amount of bits needed to encode the discourse in topic space. For example, with less overlap between individual concept vectors, the uncertainty about the topic(s) is higher, resulting in a higher entropy.

Since an increase in text size will lead to a higher uncertainty and, thus, a higher entropy, a metric of the global discourse is mainly a measure of the (semantic) text size. Similar to Section 2.1.2, the aim is not to measure text size but, instead, to only measure information rate. Hence, a sliding window will be applied. The resulting SWE describes topical uncertainty within the local discourse. Using the local discourse assures size-invariance and, accordingly, gives the (average) relatedness of the words to their local discourse.

Using a sliding window $f_w$ (Equation 2.4) of entropy H (Equation 2.1), a convertor to topic space T(X) (Equation 2.17), and pmf $p(t)$ (Equation 2.20), a measure of entropy in topic space can be defined:

$sem = fw(X)$ with $f(X) = H \circ T(X)$, a sliding window of topical entropy using pmf $p(t)$ over topics t conveyed in T(X), where X is an ordered collection of words x.

2.1.3 Sentence Features

Dependency-Locality

The Dependency Locality Theory (DLT) states that a reader, while reading, performs a moment-by-moment integration of new information sources. For commonly used sentences, integration costs are the main cause of difficulty: "reasonable first approximations of comprehension times can be obtained from the integrations costs alone, as long as the linguistic memory storage used is not excessive at these integration points" (Gibson, 1998, p. 19). In other words, when the load of remembering previous discourse referents is not exceeding storage capacity, memory costs will not be significant. Normally, such excessive storage requirements will be rare. Hence, the focus will be on integration costs alone. Integration costs were found to be dependent on two factors. First, the type of the element to be integrated, where new discourse elements require more resources than established ones. Second, the distance between the to be integrated head and its referent, where distance is measured by the number of intervening discourse elements. Section 2.2.4 operationalizes these observations about integration costs:

loc = I(D), sentential integration costs where D is the collection of dependencies within a sentence (Equation 2.13).

Surprisal

Constraint-satisfaction accounts use the informativeness of a new piece of information to predict its required processing effort. Although many models can be used to base a measure of surprisal on, words are preferable, capturing both lexical and syntactical effects and giving an important simplification from more sophisticated representations which are based on the same underlying words. A common metric of sentence probability is perplexity. It is inversely related to the probability: the higher the probability, the more predictable the sentence was, the less the surprisal. A normalized version will be reported, giving the surprisal (alternatives) per word:

$sur_n = PP_n(X)$, n-gram perplexity, where X is a sentence consisting of N words x, $X = \{x_i : i = 1, \dots, N\}$ (see Equation 2.3).

Key to perplexity is the training corpus used to base the pmf p(w) on (see Equation 2.6). As a representative collection of writing, this study uses the Google Books N-Gram corpus (see Section 2.3).

2.1.4 Discourse Features

Connectives

Connectives, such as "although", "as", "because", and "before" are linguistic cues helping the reader integrate incoming information. Most connectives belong non-exclusively to three syntactic categories: conjunction, adverbs, and prepositional phrases. Of these, subordinate conjunctions give the best approximation of connectives. A subordinate conjunction explicitly connects an independent and a dependent clause. Although this excludes most additive connectives, where there is (often) not a clear independent clause making these words categorized as (more general) adverbs, this includes the most beneficial type of causal connectives (Fraser, 1999).
con = p({subordinate conjunction}, X), the ratio of subordinate conjunctions to words in a text X (see Equation 2.11).

Cohesion

Morris and Hirst (1991) argued that cohesion is formed by lexical chains; that is, sequences of related words spanning a discourse topic. A cohesive text can then be formalized as having dense lexical chains. Equation 2.5 provides a generic way to calculate the local cohesion of a text ($C_n(X)$). Defining two types of similarity $sim(s_i, s_j)$, Equation 2.5 can be used to identify:

$$coh1_n = C_n(X), \text{ local cohesion over n foregoing sentences s in a discourse X using anaphora-}$$
$$\text{based connections } sim(s_1, s_2) \text{ (Equation 2.14).}$$

$$coh2_n = C_n(X), \text{ local cohesion over n foregoing sentences s in a discourse X using semantic-}$$
$$\text{based relatedness } sim(s_1, s_2) \text{ (Equation 2.18).}$$

2.2 Models and Equations

The features suggested in the previous section (Section 2.1) used numerous equations and models, the details of which will be described next. Four representational models will be described: n-grams, semantic lexicons, phrase structure grammars, and topic models. Each model represents a different aspect of information, creating a complementary set of representations. Furthermore, a few common equations will be described first, which can be defined irrespective of the underlying representational model.

2.2.1 Common Methods

Three types of common methods will be described: entropy, sliding window, and cohesion.

Entropy

Entropy is a measure of the uncertainty with a random variable. It defines the amount of bits needed to encode a message, where a higher uncertainty requires more bits. Entropy can be directly calculated from any probability distribution. Consider the random variable X with pmf p(x) for every value x. Then, the entropy is defined as (Shannon, 1948):

$$H(X) = - \sum_{x \epsilon X} p(x) \log_2 p(x) \qquad (2.1)$$

For longer sequences entropy can be defined as well. If we define a range of variables $X_1, \ldots, X_n$ with pmf $p(x_1, \ldots, x_n)$ giving the probability for a sequence of values occuring together, then the joint entropy is given by (Cover and Thomas, 2006):

$$Hn(X_1, \ldots, X_n) =$$
$$- \sum_{x \epsilon X1} \cdots \sum_{x \epsilon Xn} p(x_1, \ldots, x_n) \log_2 p(x_1, \ldots, x_n) \qquad (2.2)$$

The range of variables $X_1, \ldots, X_n$ can be equal to the variable X (i.e., $H_n(X_1, \ldots, X_n) = H_n(X)$), such that the pmf $p(x_1, \ldots, x_n)$ indicates the probability of the sequence $x_1, \ldots, x_n$ in X (see Section 2.2.2).

Perplexity is a different notation for entropy which is most commonly used for language modelling purposes (Goodman, 2001). Perplexity is an indication of the uncertainty, such that the perplexity is inversely related to the number of possible outcomes given a random variable. It is defined as following:

$$PP_n(X) = 2^{Hn(X)} \qquad (2.3)$$

Generally, perplexity is normalized by the number of (sequences of) symbols.

Sliding Window

For entropy calculations, the size n of the variable X will inevitably lead to a higher entropy: more values implies more bits are needed to encode the message. A sliding window, calculating the average entropy per window over the variable X, creates a size-invariant measure; that is, the (average) information rate. Given the variable X = {$x_i$ : i = 1, ... , n}, any function f over X can be rewritten to a windowed version $f_w$:

$$f_w(X) = \sum_{i=w}^{n} (n-w)^{-1} f \circ \{x_j : j = i-w+1, \ldots, i\} \qquad (2.4)$$

Depending on the type of entropy, different functions f can be used. Here, three implementations will be given: standard entropy f(X) = H(X), n-gram entropy $f(X) = H_n(X)$, and entropy in topic space $f(X) = H \circ T(X)$. Both standard entropy and n-gram entropy use the pmf p(x) defined in Section 2.2.2, whereas topical entropy is defined with pmf p(t) (see Equation 2.20).

Cohesion

Independent of the level of analysis, cohesion measures share a common format based on a similarity function $\mathrm{sim}(x_i, x_j)$ between two textual units $x_i$ and $x_j$. Although the type of units does not require a definition, only sentences will be used as units. Let X be an ordered collection of units, then the local coherence over n nearby units is:

$$C_n(X) = \sum_{i=1}^{|X|} \sum_{j=\max(1,i-n)}^{i-1} (i-j)^{-1} \mathrm{sim}(x_i, x_j) \qquad (2.5)$$

This includes a weighting factor $(1/(i-j))$, set to be decreasing with increasing distance between the units: connections between closeby units are valued higher. This is in line with Coh-Metrix (Graesser et al., 2004) and the DLT (Gibson, 2000), who posit references spanning a longer distance are less beneficial to the reading experience.

Defining two types of similarity $\mathrm{sim}(x_i, x_j)$, Equation 2.5 is used to identify semantic similarity (see Equation 2.18) and co-reference similarity (see Equation 2.14) between sentences.

2.2.2 N-Grams and Language Models

The goal of a language model is to determine the probability of a sequence of symbols $x_1 \dots x_m$, $p(x_1 \dots x_m)$. The symbols are usually words, where a sequence of words usually models a sentence. The symbols can be more than words: for example, phonemes, syllables, etc.. N-grams are employed as a simplification of this model, the so-called trigram assumption. N-grams are subsequences of length n consecutive items from a given sequence. Higher values of n in general lead to a better representation of the underlying sequence. Broken down into components, the probability can be calculated and approximated using n-grams of size as following:

$$p(x_1 \dots x_m) = \prod_{i=1}^{m} p(x_i|x_1, \dots , x_{i-1})$$
$$\approx \prod_{i=1}^{m} p(x_i|x_{i-(n-1)}, \dots , x_{i-1}) \qquad (2.6)$$

The probability can be calculated from n-gram frequency counts as following, based on the number of occurences of a symbol $x_i$ or a sequence of symbols $x_1 \dots x_m$ of n-gram size n:

$$p(x_i) = c(x_i)/\sum_x c(x) \qquad \text{if } n{=}1 \quad (2.7)$$

$$p(x_i|x_{i-(n-1)}, \dots , x_{i-1})$$
$$= c(x_{i-(n-1)}, \dots , x_{i-1}, x_i)/c(x_{i-(n-1)}, \dots , x_{i-1}) \text{ if } n{>}1 \qquad (2.8)$$

The frequency counts can be based on a separate set of training data (e.g., Google Books N-Gram corpus, See Section 2.1.3) or on an indentical set of training and test data (e.g., a random variable). The former can lead to zero probabilities for a (sequence) of values, when a value from the test set does not occur in the training set (i.e., the model). To this end, smoothing techniques are often employed. For more information on language models and smoothing techniques we refer to Goodman (2001).

2.2.3 Semantic Lexicon

A semantic lexicon is a dictionary with a semantic network. In other words, not only the words but also the (type of) relationships between words are indexed. In a semantic lexicon a set of synonyms can be defined as $\varphi$; then the synonym sets related to a word w is:

$$A_0(w) = \{\varphi \in W | w \in \varphi\} \qquad (2.9)$$

where W stands for the semantic lexicon and the 0 indicates no related synsets are included.

Node Degree

Continuing on Equation 2.9, the node degree $A_1(w)$ of a word can be defined. All the synonym sets related in n steps to a word w is given by:

$$A_n(w) = A_{n-1}(w) \cup \{\varphi \in W | r(\varphi, \varphi') \wedge \varphi \in A_{n-1}(w)\} \quad (2.10)$$

where $r(\varphi, \varphi')$ is a boolean function indicating if there is any relationship between synonym set $\varphi$ and synonym set $\varphi'$.

The number of synonym sets a word is related to within step is the node degree of that word (Steyvers and Tenenbaum, 2005). The definition supplied in Equation 2.10 is different from the node degree as defined by Steyvers and Tenenbaum, 2005, for it combines polysemic word meanings and, therefore, is the node degree of the set of synonym sets $A_0(W)$ related to a word w (see Equation 2.9) instead of the node degree of one synonym set (Steyvers and Tenenbaum, 2005). Moreover, the node degree as defined in Equation 2.10 is generalized to n steps.

2.2.4 Phrase Structure Grammar

A phrase structure grammar describes the grammar of (part of) a sentence. It describes a set of production rules transforming a constituent i of type $\xi_i$ to constituent j of type $\xi_j$: $\xi_i \rightarrow \xi_j$, where i is a non-terminal symbol and j a non-terminal or terminal symbol. A terminal symbol is a word, non-terminal symbols are syntactic variables describing the grammatical function of the underlying (non-)terminal symbols. A phrase structure grammar begins with a start symbol, to which the production rules are applied until the terminal symbols are reached; hence, it forms a tree.
For automatic parsing a PCFG will be used (see Section 2.3), which defines probabilities to each of the transitions between constituents. Based on these probabilities, the parser selects the most likely phrase structure grammar; i.e., the parse tree. The parse tree will furtheron be denoted as P.

Syntactic Categories

Each terminal node is connected to the parse tree via a non-terminal node denoting its Part-Of-Speech (POS). The POS indicates the syntactic category of a word, for example, being a verb or a noun (Marcus, 1993). The constitution of a text in terms of POS tags can simply be indicated as following. Let u be the the unit of linguistic data under analysis (e.g., a text T), let $n(u, y)$ be the number of occurrences of POS tag y in u, and let $n(u)$ be the total number of POS tags in u. Then, the ratio of POS tags Y compared to all POS tags in u is:

$$P(Y, u) = \sum_{y \in Y} n(u, y)/n(u) \qquad (2.11)$$

Locality

Between different nodes in the parse tree P dependencies exists, indicating a relation between parts of the sentence. The collection of dependencies in a parse tree P will be denoted as D and a dependency between node a and node b as d. Using the definition of the DLT (Gibson, 2000), the length of (or integration cost of) a dependency d is given by the number of discourse referents in between node a and node b, inclusive, where a discourse referent can be (pragmatically) defined as a noun, proper noun, or verb (phrase). Defining u as the POS tags of the terminal nodes between and including node a and b of a dependency d, the dependency length is given by:

$$L_{DLT}(d) = n(u, \{noun, proper\ noun, verb\}) \qquad (2.12)$$

where $n(u, Y) = \Sigma_{y \in Y}\ n(u, y)$ is the number of occurences of POS tag y in u.

The integration costs of a whole sentence containing dependencies D is then defined as:

$$I(D) = \sum_{d \in D} L_{DLT}(d) \qquad (2.13)$$

Co-references

Essentially, co-reference resolution identifies and relates mentions. A mention is identified using the parse tree P, usually a pronominal, nominal, or proper noun phrase. Connections are identified using a variety of lexical, syntactic, semantic, and discourse features, such as their proximity or semantic relatedness. Using the number of referents shared between sentences, a similarity measure can be defined. Given the set of referents R and a boolean function m(r, s) denoting true if a referent r is mentioned in a sentence s, a sentence similarity metric based on co-references is then:

$$sim(s_i, s_j) = |\{r \in R | m(r, s_i) \wedge m(r, s_j)\}| \qquad (2.14)$$

Using Equation 2.5, this similarity metric can indicate textual cohesion.

2.2.5 Topic Model

A topic model is a model of the concepts occuring in a (set of) document(s). This can be derived without any previous knowledge of possible topics; e.g., as is done with Latent Dirichlet Allocation (LDA), which discovers the underlying, latent, topics of a document. This approach has a few drawbacks: it derives a preset number of topics, and giving a human-understandable representation of the topics is complicated (Bleiand Lafferty, 2009). On the contrary, a "fixed" topic model, consisting of a set of pre-defined topics, can also be used. Such a model does not suffer the mentioned drawbacks but is less flexible in the range of topics it can represent.

ESA will be used for a topic model. It supports a mixture of topics and it uses an explicit preset of possible topics (dimensions). This preset is based on Wikipedia, where every Wikipedia article represents a topic dimension. A single term (word) is represented in topic space based on its value for each of the corresponding Wikipedia articles $d_n$:

$$T(x) = [ti(x, d_1)\ ti(x, d_2) \ldots ti(x, d_n)] \qquad (2.15)$$

where n is the number of topics (i.e., articles) and $ti(x, d_j)$ is the tf-idf value for term x. It is given by:

$$ti(x, d_j) = tf(x, d_j * idf(x)$$

$$tf(x, d_j) = 1 + log c(x, dj)/|dj|\ if\ c(x, dj) > 0$$

$$tf(x, d_j) = 0\ else$$

$$idf(x) = log(n/|\{d_j : x \in d_j\}|') \qquad (2.16)$$

where $c(x, d_j)$ gives the number of occurences of term x in document $d_j$ and $|d_j|$ gives the number of terms in document $d_j$. Hence, it is a regular inverted index of a Wikipedia collection which underlies the topic model: the topic vector T(x) is a tf-idf vector of a word (query term) x.

Using Wikipedia as the basis for the topics gives a very broad and up-to-date set of possible topics, which has been shown to outperform state-of-the-art methods for text categorization and semantic relatedness (Gabrilovich and Markovitch, 2009).

Topic Centroid

The topics covered in a text fragment is defined as the centroid of the vectors representing each of the individual terms. Given a text X containing n words $\{x_i : i = 1, ... , n\}$, the concept vector is defined as following (Abdi, 2009):

$$T(X) = \sum\nolimits_{i=1}^{n} T(x_i)/n \qquad (2.17)$$

The centroid of topic vectors gives a better representation of the latent topic space than each of the individual topic vectors. Combining vectors leads to a synergy, disambiguating word senses. Consider two topic vectors $T_1 = [a, b]$ and $T_2 = [b, c]$ which each have two competing meanings yet share one of their meanings (i.e., b). This shared meaning b will then be favored in the centroid of the two vectors [½a, b, ½c], essentially disambiguating the competing senses (Gabrilovich and Markovitch, 2009).

Semantic Relatedness

The cosine similarity measure has been shown to reflect human judgements of semantic relatedness, with a r=0.75 correspondence as compared to a r=.35 for WordNet-based semantic relatedness (Gabrilovich and Markovitch, 2009). Hence, for $sim(x_1, x_2)$ the ESA semantic relatedness measure is defined:

$$sim(x_1, x_2) = \{T(x_1) \cdot T(x_2)\} / \{\|T(x_1)\| \, \|T(x_2)\|\} \qquad (2.18)$$

where $\|T(x)\|$ is the norm of topic vector T(x) for a linguistic unit x. The exact unit is undefined here, for it can be words or combinations of words (e.g., sentences). A sentence-level semantic relatedness measure can be used as input for Equation 2.5, defining a semantic cohesion measure.

In Degree

A measure of connectedness based on the ESA topic model is implemented using the number of links pointing to each topic (i.e., Wikipedia article). Thus, if a topic is central to a wide range of topics (i.e., having a lot of incoming links), it is considered a common, well-connected, topic (Gabrilovich and Markovitch, 2009). Let I be a vector in topic space containing for each topic t the number of links $i_t$ pointing to that topic. The connectedness of a topic vector T is then defined as:

$$C(T) = \log_{10}(T \cdot I) \qquad (2.19)$$

A logaritmic variant is used based on graph theory, stating that with any self-organized graph few nodes are highly central and many nodes are in the periphery, showing a log-log relation (Barabasi and Albert, 1999).

Probability Distribution

The probability distribution over topics is easily derived from a topic vector (e.g., a centroid vector). Considering each of the elements of a topic vector are weights indicating the relevance of the element, the relative importance of an element can be derived by comparing the tf-idf weight of the element to the tf-idf weights of all elements in the topic vector. That is, the probability of an element t (i.e., a topic) in a topic vector T = $[t_1, ..., t_n]$ is defined as its relative weight:

$$p(t) = t/(\textstyle\sum_{i=1}^{n} t_i) \text{ if } t \in T \text{ ;}$$

$$p(t) = 0 \text{ else} \qquad\qquad (2.20)$$

Using the probability distribution p(t) for every topic t in a topic vector T, the entropy H(T) can be calculated (see Equation 2.2).

2.3 Feature Extraction

Each of the features were extracted from one or more of the representational models: n-grams, semantic lexicon, phrase structure grammar, and topic model. The common implementation details and the implementation details per representational model will be described.

For all features, the Stanford CoreNLP word and sentence tokenizers were used (cf. Toutanova et al., 2003). Words were split up in syllables using the Fathom toolkit (Ryan, 2012). Where possible (i.e., for n-grams, semantic lexicons, and topic model), the Snowball stemmer was applied (Porter, 2001), reducing each word to its root form. As model representative for common English the Google Books N-Gram corpus was used (Michel et al., 2011). For each (sequence of) words, the n-gram frequencies were summed over the years starting from the year 2000.

Concerning n-grams, entropy was calculated on n-grams of length n = 1 ... 5 and windows of size w = 25 for words and N = 100 for characters. The window size was based on a limit to the minimal required text length (in this case 100 characters or 25 words) and a trade-off between, on the one hand, psycholinguistic relevance (i.e., a stronger effect for nearer primes) and, on the other hand, a more reliable representation. As input for the SWE algorithm, next to characters, stemmed words were used. The stemmer was applied in order to reduce simple syntactical variance and, hence, give more significance to the semantic meaning of a word.

As a semantic lexicon (W in Equation 2.9) we used WordNet (version 3.0). WordNet is a collection of 117,659 related synonym sets (synsets), each consisting of words of the same meaning. The synsets are categorized according to their part-of-speech, either being a noun, verb, adverb, or adjective. Each synset is connected to other synsets through (one of) the following relations: an antonymy (opposing-name), hyponymy (sub-name), meronymy (part-name), holonymy (whole-name), troponymy (manner-name; similar to hyponymy, but for verbs), or entailment (between verbs) (Miller, 1995). Before matching a word to a synset, each word was stemmed. Moreover, stopwords were removed from the bag of words. Due to memory limitations a maximum n of 4 was used for the connectedness features based on the semantic lexicon. For computing the semantic lexicon based cohesion measure (see Section 2.1.4), the StOnge distance measure was calculated using as parameters C = 6.5 and k = .5. For parsing sentences to a PCFG the Stanford Parser was used (Klein and Manning, 2003). Before PCFG parsing, the words were annotated with their POS tags. POS detection was performed using the Standford POS tagger. The resulting trees are used for co-reference resolution using the Stanfords Multi-Pass Sieve Coreference Resolution System (Lee et al., 2011). Due to computational complexity, co-reference resolution is limited to smaller chunks of text and, therefore, was only calculated for paragraphs.

The ESA topic model was created using a Lucene (Hatcher et al., 2010) index of the whole English Wikipedia data set. This data was preprocessed to plain text, removing stopwords, lemmatizing terms using the Snowball stemmer (Porter, 2001), and removing all templates and links to images and files. This lead to a total of 3,734,199 articles or topic dimensions. As described by Gabrilovich and Markovitch (2009), each term in the index was normalized by its L2-norm. Moreover, the index was pruned as following: considering the sorted values related to a term, if over a sliding window of 100 values the difference is less than five percent of the heighest value for that term, the values are truncated below the first value of the window (Gabrilovich and Markovitch, 2009, p. 453).

The pre-processing is not defined; it has to result in text split at various levels, until the level of paragraphs. We assume texts are already pre-processed. The features were computed on article, section, and paragraph level. For those features extracted at a smaller granularity, such as at a sentence or word level, the results were aggregated by deriving their statistical mean. This assured that parameters indicative of the length of the text (e.g., the number of observations, the sum, or the sum of squares) were not included, reducing the influence of article length.

The invention has thus been described by means of a preferred embodiment. It is to be understood, however, that this disclosure is merely illustrative. Various details of the structure and function were presented, but changes made therein, to the full extent extended by the general meaning of the terms in which the appended claims are expressed, are understood to be within the principle of the present invention. The description shall be used to interpret the claims. The claims should not be interpreted as meaning that the extent of the protection sought is to be understood as that defined by the strict, literal meaning of the wording used in the claims, the description and drawings being employed only for the purpose of resolving an ambiguity found in the claims. For the purpose of determining the extent of protection sought by the claims, due account shall be taken of any element which is equivalent to an element specified therein.

References

Abdi, H. (2009). Centroids. Wiley Interdisciplinary Reviews: Computational Statistics, 1(2):259-260.

Barabási, A.-L. and Albert, R. (1999). Emergence of scaling in random networks. Science, 286(5439):509-512.

Blei, D. M. and Lafferty, J. D. (2009). Text mining: Classification, clustering, and applications. In Srivastava, A. N. and Sahami, M., editors, Text Mining: Classification, Clustering, and Applications, chapter Topic Models, pages 71-94. CRC Press.

Breiman, L. (2001). Random forests. Machine Learning, 45(1):5-32.

Chang, C.-C. and Lin, C.-J. (2011). LibSVM: A library for support vector machines. ACM Trans. Intell. Syst. Technol., 2(3):27:1-27:27.

Cover, T. M. and Thomas, J. A. (2006). Elements of Information Theory, chapter Entropy, Relative Entropy, and Mutual Information, pages 13-56. John Wiley & Sons, Inc.

Duchowski, A. T. (2007). Eye tracking methodology: Theory and practice. London, UK: Springer-Verlag, 2nd edition.

Fraser, B. (1999). What are discourse markers? Journal of Pragmatics, 31(7):931 - 952.

Gabrilovich, E. and Markovitch, S. (2009). Wikipedia-based semantic interpretation for natural language processing. J. Artif. Int. Res., 34:443-498.

Gibson, E. (1998). Linguistic complexity: locality of syntactic dependencies. Cognition, 68(1): 1 - 76.

Gibson, E. (2000). The dependency locality theory: A distance-based theory of linguistic complexity. In Image, language, brain: Papers from the first mind articulation project symposium, pages 95-126.

Goodman, J. T. (2001). A bit of progress in language modeling. Computer Speech & Language, 15(4):403 - 434.

Graesser, A., McNamara, D., Louwerse, M., and Cai, Z. (2004). Coh-Metrix: Analysis of text on cohesion and language. Behavior Research Methods, 36(2):193-202.

Hatcher, E., Gospodnetic, O., and McCandless, M. (2010). Lucene in Action. Manning, 2nd revised edition. edition.

Ihaka, R. and Gentleman, R. (1996). R: A Language for Data Analysis and Graphics. Journal of Computational and Graphical Statistics, 5(3):299-314.

Järvelin, K. and Kekäläinen, J. (2002). Cumulated gain-based evaluation of IR techniques. ACM Trans. Inf. Syst., 20(4):422-446.

Klein, D. and Manning, C. D. (2003). Accurate unlexicalized parsing. In Proceedings of the 41st annual meeting on Association for computational linguistics, volume 1 of ACL '03, pages 423-430, Stroudsburg, PA, USA. Association for Computational Linguistics.

Lee, H., Peirsman, Y., Chang, A., Chambers, N., Surdeanu, M., and Jurafsky, D. (2011). Stanford's multi-pass sieve coreference resolution system at the conll-2011 shared task. In Goldwater, S. and Manning, C., editors, Proceedings of the Fifteenth Conference on Computational Natural Language Learning: Shared Task, CONLL Shared Task '11, pages 28-34, Stroudsburg, PA, USA. Association for Computational Linguistics.

Liu, T.-Y. (2009). Learning to rank for information retrieval. Found. Trends Inf. Retr., 3(3):225-331.

Manning, C. D., Raghavan, P., and Schütze, H. (2008). Introduction to information retrieval, volume 1. Cambridge University Press Cambridge.

Marcus, M. P., Marcinkiewicz, M. A., and Santorini, B. (1993). Building a large annotated corpus of english: the penn treebank. Comput. Linguist., 19(2):313-330.

Meyer, D., Leisch, F., and Hornik, K. (2003). The support vector machine under test. Neurocomputing, 55(1-2):169-186.

Meyer, D. E. and Schvaneveldt, R. W. (1971). Facilitation in recognizing pairs of words: evidence of a dependence between retrieval operations. Journal of Experimental Psychology, 90(2):227-234.

Michel, J.-B., Shen, Y. K., Aiden, A. P., Veres, A., Gray, M. K., Pickett, J. P., Hoiberg, D., Clancy, D., Norvig, P., Orwant, J., and et al. (2011). Quantitative analysis of culture using millions of digitized books. Science, 331(6014):176-182.

Miller, G. A. (1995). Wordnet: a lexical database for english. Commun. ACM, 38(11):39-41.

Morris, J. and Hirst, G. (1991). Lexical cohesion computed by thesaural relations as an indicator of the structure of text. Computational Linguistics, 17(1):21-48.

Porter, M. F. (2001). Snowball: A language for stemming algorithms. http://snowball.tartarus.org/texts/introduction.html [Last accessed on August 1, 2012].

Powers, D. M. W. (2011). Evaluation: From precision, recall and f-factor to roc, informedness, markedness & correlation. Journal of Machine Learning Technology, 2(1):37-63.

Ryan, K. (2012). Fathom - measure readability of English text. http://search.cpan.org/-kimryan/Lingua-EN-Fathom-1.15/lib/Lingua/EN/Fathom.pm [Last accessed on August 01, 2012].

Schwarz, G. (1978). Estimating the dimension of a model. The Annals of Statistics, 6(2): 461-464.

Shannon, C. E. (1948). A mathematical theory of communication. Bell System Technical Journal, 27(7, 10):379-423, 625-656.

Silvia, P. J. (2006). Exploring the psychology of interest. Oxford University Press, New York.

Sperber, D. and Wilson, D. (1996). Relevance: Communication and Cognition. Wiley.

Steyvers, M. and Tenenbaum, J. B. (2005). The large-scale structure of semantic networks: Statistical analyses and a model of semantic growth. Cognitive Science, 29(1):41-78.

Toutanova, K., Klein, D., Manning, C. D., and Singer, Y. (2003). Feature-rich part-of-speech tagging with a cyclic dependency network. In NAACL '03: Proceedings of the 2003 conference of the North American Chapter of the Association for Computational Linguistics on Human Language Technology, pages 173-180, Morristown, NJ, USA. Association for Computational Linguistics.

Zipf, G. K. (1935). The psycho-biology of language: An introduction to dynamic philology. Houghton Mifflin, Boston.

**Claims**

1. A method for receiving and presenting information to a user in a computer network or a computer device, comprising:

   the step of receiving at least one text from the computer network or the computer device, said text being tagged with a text information intensity indicator;

the step of determining a user channel capacity indicator;

the step of comparing said channel capacity indicator with said text information intensity indicator; and

the step of presenting said text or a representation of said text to said user on said device or an a device in said computer network, wherein said presentation of said text or said representation of said text is modified by using the result of said comparison.

2.  The method according to claim 1, wherein said text information intensity and user channel capacity indicator each comprise a multitude of numerical values, each value representing a different text complexity feature.

3.  The method according to claim 2, wherein the step of comparing said indicators comprises the step of establishing the difference, for instance in the form of a positive or negative distance between each text information intensity vector representation of said numerical values with said user channel capacity vector representation of said numerical values, and comparing said differences.

4.  The method according to claim 1, 2 or 3, wherein the step of modifying said presentation comprises the step of giving preference to texts having smaller differences between their text information intensity indicator and the user channel capacity indicator over texts having larger difference between their text information intensity indicator and the user channel capacity indicator.

5.  The method according to any of the previous claims, further comprising the step of determining whether the difference is positive or negative, and using this determination for modifying said presentation.

6.  The method according to any of the previous claims, wherein said user channel capacity indicator is linked to said user.

7.  The method according to any of the previous claims, wherein said user channel capacity indicator is established by analyzing texts which said user interacts with, generates and/or opens in said computer network or on said computer device, and storing said user channel capacity indicator in said computer network or on said computer device.

8.  The method according to claim 7, wherein said user channel capacity indicator is established by analyzing said texts in the same manner as the received texts are analyzed to establish said text information intensity indicator.

9.  The method according to any of the previous claims and including claim 2, wherein said text complexity features comprise at least one, preferably more than one, of the following features:

    - lexical familiarity of words, for instance as defined by:

    $$fam = \log_{10} cnt(w),$$
    wherein, for a word w, $cnt(w)$ is the term count of the word in a collection of standard, contemporary writing ;

    - connectedness of words, for instance as defined by:

    $$con1 = |A_n(w)| = |A_{n-1}(w) \cup \{\varphi \in W | r(\varphi, \varphi') \wedge \varphi \in A_{n-1}(w)\}| \; (Equation \; 2.10)$$

    wherein $|A_n(w)|$ is the node degree in n steps to a word w, where $r(\varphi, \varphi')$ is a Boolean function indicating if there is any relationship between synonym set $\varphi$ and synonym set $\varphi'$ in a semantic lexicon; or
    as defined by:

    $$con2 = C(T(w)) = C \circ T(w) = C \circ [t_1, \ldots, t_n], \quad (Equation \; 2.15)$$

    wherein n is the number of topics in a topic space, where each topic t indicates the extent to which a word w is associated with a topic t, and

$$C(T) = \log_{10}(T \cdot I), \qquad \text{(Equation 2.19)}$$

wherein I is a vector in topic space containing for each topic t the number of links $i_t$ pointing to that topic, and T is a topic vector;
- character density in texts, for instance as defined by:

$$cha_n = f_w(X) \text{ with } f(X) = H_n(X).$$

$$\text{with } f_w(X) = \sum_{i=w}^{N} (N-w)^{-1} f \circ \{x_j : j = i-w+1, \dots, i\}$$

$$\text{with } H_n(X) = - \sum_{x1 \in X} \dots \sum_{xn \in X} p(x_1, \dots, x_n)\log_2 p(x_1, \dots, x_n), \qquad \text{(Equation 2.2)}$$

where X is an ordered collection of N characters x, $X = \{x_i : i = 1, \dots, N\}$, w defines a window size, and $p(x_1, \dots, x_n)$ indicates the probability of the sequence $x_1, \dots, x_n$ of length n in X;
- word density in texts, for instance as defined by:

$$wor_n = f_w(X) \text{ with } f(X) = H_n(X)$$

$$\text{with } f_w(X) = \sum_{i=w}^{N} (N-w)^{-1} f \circ \{x_j : j = i-w+1, \dots, i\}$$

$$H_n(X) = - \sum_{x1 \in X} \dots \sum_{xn \in X} p(x_1, \dots, x_n)\log_2 p(x_1, \dots, x_n) \qquad \text{(Equation 2.2)}$$

where X is an ordered collection of N words x, $X = \{x_i : i = 1, \dots, N\}$, w defines a window size, and $p(x_1, \dots, x_n)$ indicates the probability of the sequence $x_1, \dots, x_n$ of length n in X;
- semantic density in texts, for instance as defined by:

$$sem = f_w(X) \text{ with } f(X) = H(T(X)) = H \circ T(X)$$

$$\text{with } f_w(X) = \sum_{i=w}^{n} (n-w)^{-1} f \circ \{x_j : j = i-w+1, \dots, i\} \qquad \text{(Equation 2.4)}$$

$$\text{with } H(T) = - \sum_{t \in T} p(t)\log_2 p(t) \qquad \text{(Equation 2.1)}$$

$$\text{with } T \circ X = \sum_{i=1}^{n} T(x_i)/n \qquad \text{(Equation 2.17)}$$

where $X = \{x_i : i = 1, \dots, n\}$ is an ordered collection of n words x;

where $T \circ x = [t_1, \dots, t_m]$ is a topic vector for a word x defined as its relative weight for m topics t,

$$\text{wherein } p(t) = t/(\sum_{i=1}^{n} t_i) \text{ if } t \in T \text{ ; } p(t) = 0 \text{ else} \qquad \text{(Equation 2.20);}$$

- dependency-locality in sentences, for instance as defined by:

$$loc = I(D) = \sum_{d \in D} L_{DLT}(d) \qquad \text{(Equation 2.13)}$$

where D is a collection of dependencies d within a sentence,
wherein d contains at least two linguistic units,
wherein $L_{DLT}(d) = cnt(d, Y) = \Sigma_{y \in Y} cnt(d,y)$

where cnt(d, y) is the number of occurrences of a new discourse referent, such as suggested by Y={noun, proper noun, verb}, in d;
- surprisal of sentences, for instance as defined by:

$$\mathrm{sur_n} = \mathrm{PP_n(X)} = 2^{\mathrm{Hn(X)}} \qquad \text{(Equation 2.3)}$$

with $H_n(X) = - \Sigma_{x1 \in X} \ldots \Sigma_{xn \in X} \, p(x_1, \ldots, x_n) \log_2 p(x_1, \ldots, x_n)$
where X is a sentence consisting of N words x, $X = \{x_i : i = 1, \ldots, N\}$;
- ratio of connectives in texts, for instance as defined by:

$$P(Y, u) = \sum_{y \in Y} \mathrm{cnt}(u, y)/\mathrm{cnt}(u) \qquad \text{(Equation 2.11)}$$

where P(Y, u) is the ratio of words with a connective function, such as Y={subordinate conjunction}, compared to all words in u,
where u is the unit of linguistic data under analysis, cnt(u, y) is the number of occurrences of connectives in u, and cnt(u) is the total number of words in u;
- cohesion of texts, for instance as defined by:

$$\mathrm{coh_n} = \mathrm{C_n(X)} = \sum_{i=1}^{N} \sum_{j=\max(1,i-n)}^{i-1} (i\text{-}j)^{-1} \mathrm{sim}(x_i, x_j) \text{ (Equation 2.5)}$$

wherein Cn(X) is the local coherence over n nearby units,
wherein $\mathrm{sim}(x_i, x_j)$ is a similarity function between two textual units $x_i$ and $x_j$,
where X is an ordered collection of N units; and

$$\text{wherein } \mathrm{sim}(x_i, x_j) = |\{r \in R | m(r, x_i) \wedge m(r, x_j)\}| \qquad \text{(Equation 2.14)}$$

where R is the set of referents and where m(r, x) is a Boolean function denoting true if a referent r is mentioned in a textual unit x,
or:

$$\text{wherein } \mathrm{sim}(x_i, x_j) = \{T(x_i) \cdot T(x_j)\}/\{\|T(x_i)\| \, \|T(x_j)\|\} \qquad \text{(Equation 2.18)}$$

where $\|T(x)\|$ is the norm of topic vector T(x) in topic space for a textual unit x.

10. The method according to any of the previous claims, wherein said user channel capacity indicators are stored locally on a device of said user, for instance as web cookies.

11. The method according to any of the previous claims, further comprising the step of receiving a request for information which a user inputs on a device in said computer network or on said computer device; wherein said received text or texts are retrieved in such a manner that they relate to the requested information.

12. The method according to any of the previous claims, wherein said method comprises providing a set of different user channel capacity indicators linked to said user and determining an appropriate user channel capacity indicator depending on an analysis of the request for information, the received information or other circumstances, such as the time of day, location or the kind of activity the user is currently undertaking.

13. The method according to claim 12, further comprising the step of filtering and/or ranking said selected texts by using the result of said comparison, and the step of presenting representations of said filtered and/or ranked texts to said user on said device or on said device in said computer network, such that said user can choose to open and/or read said texts.

14. The method according to claim 12 or 13, wherein the step of retrieving said text or texts relating to the requested information from the computer network or the computer device is performed by a web search engine such as the web search engines used by Google Search™, Bing™, Yahoo! Search™ and Baidu™.

15. A computer server system in a computer network or a computer device provided with a computer programme arranged to perform a method for receiving and presenting information to a user in said computer network, said method comprising:

the step of receiving a at least one text from the computer network or the computer device, said text being tagged with a text information intensity indicator;
the step of determining a user channel capacity indicator;
the step of comparing said channel capacity indicator with said text information intensity indicator; and
the step of presenting said text or a representation of said text to said user on said device or an a device in said computer network, wherein said presentation of said text or said representation of said text is modified by using the result of said comparison.

Europäisches
Patentamt

European
Patent Office

Office européen
des brevets

## EUROPEAN SEARCH REPORT

Application Number

EP 13 17 5793

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/180126 A1 (MATULIC FABRICE [JP]) 16 July 2009 (2009-07-16) * figures 1, 10 * * paragraph [0010] - paragraph [0011] * * paragraph [0065] - paragraph [0070] * ----- | 1-15 | INV. G06F17/27 G06F17/30 |

TECHNICAL FIELDS
SEARCHED        (IPC)

G06F

The present search report has been drawn up for all claims

| Place of search | Date of completion of the search | Examiner |
|---|---|---|
| Munich | 6 November 2013 | Eichenauer, Lars |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&: member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 13 17 5793

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2013

| Patent document cited in search report | Publication date | Patent family member(s) | Publication date |
|---|---|---|---|
| US 2009180126 A1 | 16-07-2009 | CN 101488124 A<br>JP 2009169536 A<br>US 2009180126 A1 | 22-07-2009<br>30-07-2009<br>16-07-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **ABDI, H.** Centroids. *Wiley Interdisciplinary Reviews: Computational Statistics,* 2009, vol. 1 (2), 259-260
- **BARABÁSI, A.-L. ; ALBERT, R.** Emergence of scaling in random networks. *Science,* 1999, vol. 286 (5439), 509-512
- Text mining: Classification, clustering, and applications. **BLEI, D. M. ; LAFFERTY, J. D.** Text Mining: Classification, Clustering, and Applications, chapter Topic Models. CRC Press, 2009, 71-94
- **BREIMAN, L.** Random forests. *Machine Learning,* 2001, vol. 45 (1), 5-32
- **CHANG, C.-C. ; LIN, C.-J.** LibSVM: A library for support vector machines. *ACM Trans. Intell. Syst. Technol.,* 2011, vol. 2 (3
- Entropy, Relative Entropy, and Mutual Information. **COVER, T. M. ; THOMAS, J. A.** Elements of Information Theory. John Wiley & Sons, Inc, 2006, 13-56
- **DUCHOWSKI, A. T.** Eye tracking methodology: Theory and practice. Springer-Verlag, 2007
- **FRASER, B.** What are discourse markers?. *Journal of Pragmatics,* 1999, vol. 31 (7), 931-952
- **GABRILOVICH, E. ; MARKOVITCH, S.** Wikipedia-based semantic interpretation for natural language processing. *J. Artif. Int. Res.,* 2009, vol. 34, 443-498
- **GIBSON, E.** Linguistic complexity: locality of syntactic dependencies. *Cognition,* 1998, vol. 68 (1), 1-76
- **GIBSON, E.** The dependency locality theory: A distance-based theory of linguistic complexity. *Image, language, brain: Papers from the first mind articulation project symposium,* 2000, 95-126
- **GOODMAN, J. T.** A bit of progress in language modeling. *Computer Speech & Language,* 2001, vol. 15 (4), 403-434
- **GRAESSER, A. ; MCNAMARA, D. ; LOUWERSE, M. ; CAI, Z.** Coh-Metrix: Analysis of text on cohesion and language. *Behavior Research Methods,* 2004, vol. 36 (2), 193-202
- **HATCHER, E. ; GOSPODNETIC, O. ; MCCANDLESS, M.** Lucene in Action. Manning. 2010
- **IHAKA, R. ; GENTLEMAN, R.** R: A Language for Data Analysis and Graphics. *Journal of Computational and Graphical Statistics,* 1996, vol. 5 (3), 299-314

- **JÄRVELIN, K. ; KEKÄLÄINEN, J.** Cumulated gain-based evaluation of IR techniques. *ACM Trans. Inf. Syst.,* 2002, vol. 20 (4), 422-446
- Accurate unlexicalized parsing. **KLEIN, D. ; MANNING, C. D.** Proceedings of the 41st annual meeting on Association for computational linguistics. Association for Computational Linguistics, 2003, vol. 1, 423-430
- Stanford's multi-pass sieve coreference resolution system at the conll-2011 shared task. **LEE, H. ; PEIRSMAN, Y. ; CHANG, A. ; CHAMBERS, N. ; SURDEANU, M. ; JURAFSKY, D.** Proceedings of the Fifteenth Conference on Computational Natural Language Learning: Shared Task, CONLL Shared Task '11. Association for Computational Linguistics, 2011, 28-34
- **LIU, T.-Y.** Learning to rank for information retrieval. *Found. Trends Inf. Retr.,* 2009, vol. 3 (3), 225-331
- **MANNING, C. D. ; RAGHAVAN, P. ; SCHÜTZE, H.** Introduction to information retrieval. Cambridge University Press Cambridge, 2008, vol. 1
- **MARCUS, M. P. ; MARCINKIEWICZ, M. A. ; SANTORINI, B.** Building a large annotated corpus of english: the penn treebank. *Comput. Linguist.,* 1993, vol. 19 (2), 313-330
- **MEYER, D. ; LEISCH, F. ; HORNIK, K.** The support vector machine under test. *Neurocomputing,* 2003, vol. 55 (1-2), 169-186
- **MEYER, D. E. ; SCHVANEVELDT, R. W.** Facilitation in recognizing pairs of words: evidence of a dependence between retrieval operations. *Journal of Experimental Psychology,* 1971, vol. 90 (2), 227-234
- **MICHEL, J.-B. ; SHEN, Y. K. ; AIDEN, A. P. ; VERES, A. ; GRAY, M. K. ; PICKETT, J. P. ; HOIBERG, D. ; CLANCY, D. ; NORVIG, P. ; ORWANT, J. et al.** Quantitative analysis of culture using millions of digitized books. *Science,* 2011, vol. 331 (6014), 176-182
- **MILLER, G. A.** Wordnet: a lexical database for english. *Commun. ACM,* 1995, vol. 38 (11), 39-41
- **MORRIS, J. ; HIRST, G.** Lexical cohesion computed by thesaural relations as an indicator of the structure of text. *Computational Linguistics,* 1991, vol. 17 (1), 21-48
- **PORTER, M. F.** *Snowball: A language for stemming algorithms,* 01 August 2012, http://snowball.tartarus.org/texts/introduction.html

- **POWERS, D. M. W.** Evaluation: From precision, recall and f-factor to roc, informedness, markedness & correlation. *Journal of Machine Learning Technology,* 2011, vol. 2 (1), 37-63
- **RYAN, K.** *Fathom - measure readability of English text,* 01 August 2012, http://search.cpan.org/-kimryan/Lingua-EN-Fathom-1.15/lib/Lingua/EN/Fathom.pm
- Estimating the dimension of a model. **SCHWARZ, G.** The Annals of Statistics. 1978, vol. 6, 461-464
- **SHANNON, C. E.** A mathematical theory of communication. *Bell System Technical Journal,* 1948, vol. 27 (7, 10), 379-423, 625-656
- **SILVIA, P. J.** Exploring the psychology of interest. Oxford University Press, 2006
- **SPERBER, D. ; WILSON, D.** Relevance: Communication and Cognition. Wiley, 1996
- **STEYVERS, M. ; TENENBAUM, J. B.** The large-scale structure of semantic networks: Statistical analyses and a model of semantic growth. *Cognitive Science,* 2005, vol. 29 (1), 41-78
- Feature-rich part-of-speech tagging with a cyclic dependency network. **TOUTANOVA, K. ; KLEIN, D. ; MANNING, C. D. ; SINGER, Y.** NAACL '03: Proceedings of the 2003 conference of the North American Chapter of the Association for Computational Linguistics on Human Language Technology. Association for Computational Linguistics, 2003, 173-180
- **ZIPF, G. K.** *The psycho-biology of language: An introduction to dynamic philology,* 1935